# EUROPEAN PATENT APPLICATION

(11) **EP 4 420 964 A1**
(43) Date of publication of application: **28.08.2024**
(21) Application number: 23157972.3
(22) Date of filing: 22.02.2023
(51) Int. Cl.: B62D 65/16, B62D 65/02, E05B 79/06, E05B 85/10

(54) **POSITIONING APPARATUS OF AN EQUIPMENT IN AN AUTOMOTIVE VEHICLE PANEL**

(71) Applicant: MINEBEA ACCESSSOLUTIONS ITALIA S.P.A., 10044 Pianezza (IT)
(72) Inventor: PIERI, Alexandre, 10044 Pianezza (IT); GUERIN, Anthony, 10044 Pianezza (IT); ROUZET, Simon, 10044 Pianezza (IT); GRECO, Davide, 10044 Pianezza (IT); FRATTINI, Massimo, 10044 Pianezza (IT); GRAMAGLIA, Alberto, 10044 Pianezza (IT)
(74) Representative: Innovincia

(57) **Abstract**

The invention is directed to a positioning apparatus (30) for positioning an automotive equipment intended to be inserted in an opening defined in an automotive vehicle panel (10), the positioning apparatus (30) comprising:
- a central body (31) comprising a recess (32) intended to receive said automotive equipment (22),
- a peripheral rim (33) projecting from the central body (31), configured to cooperate with an edge (12E) of the opening (12) and to centre, within the opening, the automotive equipment that is inserted in the recess (32), and
- at least two flexible retaining members (34) arranged on the peripheral rim (33), each retaining member (34) being configured to cooperate with an edge (12E) of the opening (12) so that the positioning apparatus (30) can be removably attached to the automotive vehicle panel.

## Description

The invention relates to the mounting of automotive vehicle equipment on an automotive vehicle panel.

The aim of the invention is to provide an equipment that allows correct positioning of the automotive equipment within the opening during the mounting of said equipment on the automotive vehicle panel, and in particular to help centering the automotive equipment within the opening during said mounting.

To that end, the invention is directed to a positioning apparatus for positioning an automotive equipment intended to be inserted in an opening defined in an automotive vehicle panel, the positioning apparatus comprising:
- a central body comprising a recess intended to receive said automotive equipment,
- a peripheral rim projecting from the central body, configured to cooperate with an edge of the opening and to centre, within the opening, the automotive equipment that is inserted in the recess, and
- at least two flexible retaining members arranged on the peripheral rim, each retaining member being configured to cooperate with an edge of the opening so that the positioning apparatus can be removably attached to the automotive vehicle panel.

Thanks to the peripheral rim cooperating with an edge of the opening and centering the equipment within the opening, the positioning apparatus acts as a jig that helps obtaining a regular play between the central component and the edge of the opening. The width and shape of the peripheral rim can be adjusted depending on the play to be obtained.

At the very least, the width and shape of peripheral rim may be chosen to avoid a severe dissymmetry of placement of the central component within the opening, so as to facilitate the attachment of the automotive assembly to the vehicle panel.

For instance, in the case the automotive equipment is assembled top the vehicle panel by screwing, the presence of the positioning apparatus within the opening allows for the alignment of the screw holes provided within the automotive equipment and the vehicle panel. Thanks to this, an operator may perform the screwing without having to hold the automotive equipment.

Preferably, the retaining members include reversible snap-fit means so as to facilitate the insertion and removal of the positioning apparatus.

According to a particular embodiment, the peripheral rim and the retaining members are intended to be inserted into a gap between the automotive equipment and the edges of the opening of the automotive vehicle panel.

Preferably, the width of each retaining member is intended to be larger than the width of gap between the automotive equipment and the edges of the opening of the automotive vehicle panel.

Preferably, at least one of the retaining members is extended by a flexible tongue, configured such that displacement of the flexible tongue in a first direction imparts the displacement of said retaining member in a second direction, opposite the first direction.

According to a particular embodiment, each retaining member is extended by a flexible tongue.

According to a particular embodiment, the positioning member sensibly extends along a longitudinal axis and the retaining members are arranged on each side of the longitudinal axis, and preferably two pairs of retaining members are arranged on each side of the longitudinal axis.

According to another embodiment, the positioning apparatus comprises at least one finger prehensile area projecting from the central body, in a direction that is opposite the direction in which the peripheral rim extends, the prehensile area defining an opening for the insertion of a finger.

Preferably, the central body comprises, at one of its ends, a pushing area, configured to be able to be pushed at least partially through the opening.

The invention is also directed to an automotive assembly for equipping an automotive vehicle panel in which an opening is defined, comprising an automotive equipment comprising a central component intended to be mounted within the opening and a positioning apparatus, characterized in that said positioning apparatus is according to any one of the preceding claims.

According to a particular embodiment, the automotive equipment is a vehicle door handle, preferably a flush-type handle, and the vehicle panel is a door panel.

The invention is also directed to a method for positioning an automotive equipment on an automotive vehicle panel in which an opening is defined and defined by edges, said automotive vehicle panel comprising an outer side and an inner side, wherein the method is performed using a positioning apparatus, the method comprising the following steps :
- inserting the positioning apparatus in the opening from the outer side of the automotive vehicle panel,
- inserting the automotive equipment in the central body from the inner side of the automotive vehicle panel,
- attaching the automotive equipment to the automotive vehicle panel, for example by screwing,
- removing the positioning apparatus from the opening from the outer side of the automotive vehicle panel.

According to a specific implementation of the above-described method, inserting the positioning apparatus involves positioning the positioning apparatus facing the opening and displacing the at least one flexible tongue in a first direction directed opposite the centre of the opening, and removing the positioning apparatus involves displacing the at least one flexible tongue in the second direction opposite the first direction.

According to a specific implementation of the general method, wherein the automotive equipment is a flush-type handle which may be tilted inside the opening, the step of removing the positioning apparatus comprises the following sub-steps:
- pushing on the pushing area in a direction towards the vehicle door panel, to active the handle tilting, and
- pulling on the finger prehensile area in a direction opposite the vehicle door panel.

### Brief description of the Figures

The invention will be better understood in view of the following description, referring to the annexed Figures in which:
- Figure 1 is a partial cross-sectional view of an automotive vehicle panel comprising an opening in which an automotive equipment equipped with a positioning apparatus according to a first embodiment of the invention is inserted;
- Figure 2 is a perspective view of the outer side of the positioning apparatus of figure 1;
- Figure 3 is a perspective view of the inner side of the positioning apparatus of figure 1;
- Figure 4 is a cross section along plane IV-IV of Figure 2 ;
- Figure 5 is a cross section along plane IV-IV for a positioning apparatus according to a variant of the invention ;
- Figure 6 is a perspective view of a positioning apparatus according to a second embodiment of the invention ;
- Figure 7 is a side view of the positioning apparatus of Figure 6 ;
- Figure 8 is cross-sectional view of an automotive panel comprising an opening in which an automotive equipment equipped with a positioning apparatus according Figure 6 is inserted ;
- Figure 9 is a perspective view of the positioning apparatus of figure 6 being removed from an automotive equipment inserted in the opening of a vehicle panel.

### Detailed Description

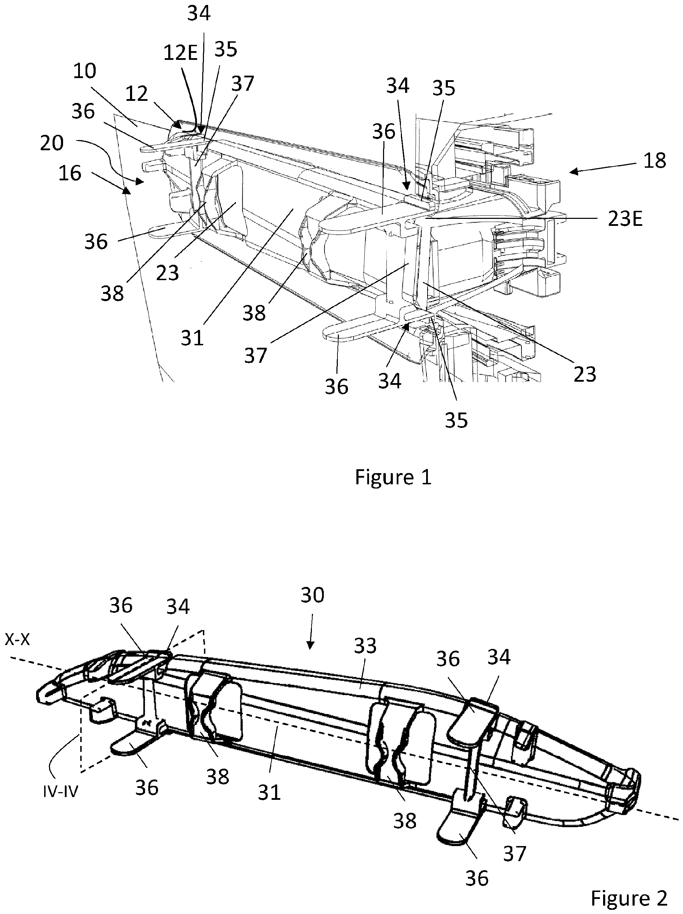

Figure 1 is a partial cross-sectional view of an automotive vehicle panel 10 in which an opening 12 is defined and delimited by an edge 12E. The automotive vehicle panel 10 comprises an outer side 16 and an inner side 18. The automotive assembly 20 is configured to cooperate with the opening 12 defined in the automotive vehicle panel 10.

Said automotive assembly 20 comprises an automotive equipment 22 comprising a central component 23 intended to be mounted within the opening 12 and a positioning apparatus 30.

In the example shown on the Figures, the automotive equipment 22 is a vehicle door handle, preferably a flush-type handle, and the vehicle panel 10 is a door panel. The handle 22 comprises a central component 23 intended to be mounted within the opening 12. The central component 23 here are gripping means intended to be gripped by the user of the vehicle to open the door panel 10.

The positioning apparatus 30 is used for positioning the automotive equipment 22 that is intended to be inserted in the opening 12 defined in the automotive vehicle panel 10. To that end, the positioning apparatus 30 comprises a central body 31 comprising a recess 32 intended to receive said automotive equipment 22, as illustrated in figure 1.

Preferably, the shape of the recess 32 matches the shape of the central component 23.

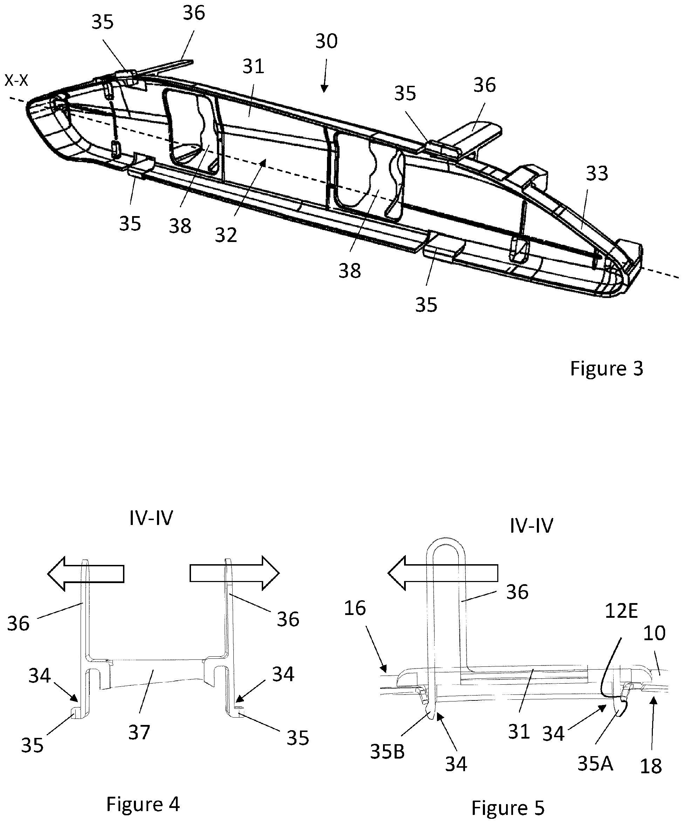

The positioning apparatus 30 also comprises a peripheral rim 33 projecting from the central body 31, as illustrated in figure 3. The peripheral rim 33 is configured to cooperate with an edge 12E of the opening 12, as illustrated in figure 1.

Peripheral rim 33 is also configured to centre, within the opening 12, the automotive equipment 20 that is inserted in the recess 32, as illustrated in figure 1. To that end, the width and shape of peripheral rim 33 may be chosen to substantially match the required play between the central component 23 and the edge 12E of the opening.

In other words, positioning apparatus 30 acts as a jig that helps obtaining a regular play between the central component 23 and the edge 12E of the opening.

At the very least, the width and shape of peripheral rim 33 is chosen to avoid a severe dissymmetry of placement of the central component 23 within the opening 12, so as to facilitate the attachment of the automotive assembly 20 to the vehicle panel 10.

For instance, in the case the automotive equipment 22 is assembled top the vehicle panel 10 by screwing, the presence of the positioning apparatus 30 within the opening 12 allows for the alignment of the screw holes (not shown) provided within the automotive equipment and the vehicle panel 10. Thanks to this, an operator may perform the screwing without having to hold the automotive equipment 22.

The peripheral rim 13 is also configured to cooperate with an edge 23E of the central component 23 to help with the centering. However, it should be noted that this cooperation does not allow the positioning apparatus 30 to be held in place on the central component 23.

The positioning apparatus 30 also comprises at least two flexible retaining members 34 arranged on the peripheral rim 33. Each retaining member 34 is configured to cooperate with an edge 12E of the opening 12 so that the positioning apparatus 30 can be removably attached to the automotive vehicle panel 10. The retaining members 34 are flexible so that they can be elastically deformed to ensure good, reversible cooperation with an edge 12E of the opening 12.

The positioning apparatus 30 sensibly extends along a longitudinal axis X-X.

According to all embodiments shown on the figures, the retaining members 34 are arranged on each side of the longitudinal axis, and preferably two pairs of retaining members 34 are arranged on each side of the longitudinal axis, as best shown on figures 2 and 3. The retaining members 34 that are arranged on each side of the longitudinal axis can be placed so that they face each other. Other alternative locations of the retaining members 34 may be considered.

The peripheral rim 33 and the retaining members 34 are intended to be inserted into a gap between the automotive equipment 22 and the edges 12E of the opening 12 of the automotive vehicle panel 10, as shown is illustrated on figures 1 and 5.

The width of each retaining member 34 here is intended to be larger than the width of gap between the automotive equipment 22 and the edges 12E of the opening 12 of the automotive vehicle panel 10. Having a larger width of each retaining member 34 allows to retain the positioning apparatus 30 on the vehicle panel 10.

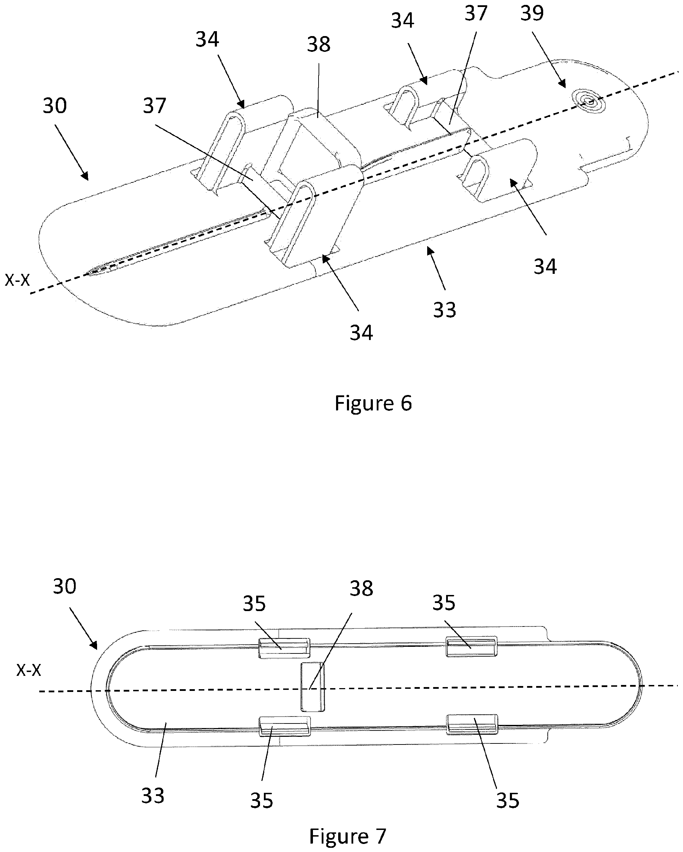

For all the embodiments shown on the figures, the retaining members 34 include reversible snap-fit means 35. Such reversible snap-fit means 35 are for instance illustrated in figures 2 to 5 for the embodiments shown on figures 1 to 5 and on figures 7 to 9 for the embodiment shown on figures 6 to 9.

In particular, figures 4 to 5 show how the reversible snap-fit means 35 cooperate with an edge 12E of the opening 12. The snap-fit means 35 are reversible so that the positioning apparatus 30 can be removably attached to the automotive vehicle panel 10. This allows them to be uncoupled if necessary. The snap-fit means 35 preferably are flexible.

In the first embodiment shown on figures 1 to 4 and in a third embodiment of the invention shown on figures 6 to 9, all retaining members 34 are identical.

In all examples shown on the figures, at least one of the retaining members 34 is extended by a flexible tongue 36.

This flexible tongue 36 is configured such that its displacement in a first direction imparts the displacement of said retaining member 34 in a second direction, opposite the first direction. In other words, if the tongue 36 is deformed in a first direction, in particular by exerting pressure on said tongue 36, then the retaining member 34 will simultaneously be displaced in a second direction, opposite the first direction, like a moving part of a clothes peg, for example. This is illustrated on figures 4 and 5, where the directions of the arrows illustrate the direction according to which a force is exerted on the tongue(s) 36.

In the first embodiment shown on figures 1 to 4, all retaining members 34 are extended by, each retaining member 34 is extended by a flexible tongue 36. Thus, all retaining members 34 can benefit from the possibility of being moved in a second direction which is specific to each retaining member 34.

Moreover, in this first embodiment, the flexible tongues 36 are arranged on each side of the longitudinal axis X-X and are connected by a flexible rib 37. Such a connection helps obtaining a symmetrical movement of the retaining members 34 on each side of the longitudinal axis X-X.

In a second embodiment of the invention shown on figure 5, only the one or more retaining member(s) 34 arranged on one side of the longitudinal axis X-X are extended by a flexible tongue 36, here on the left side of the figure. In that case, should the retaining members 34 include snap-fit means 35, said snap-fit means 35 are different from one side of the longitudinal axis X-X to the other.

For instance, a first snap-fit element 35A (on the right side of the figure) comprises a shoulder configured to cooperate with the edge of the opening 12E that is parallel with the edge of the opening 12E, i.e. substantially forming a 90°- angle with the rest of the retaining member 34. A second snap-fit element 35B, arranged on the other side of the longitudinal axis X-X, also comprises a shoulder configured to cooperate with the edge of the opening 12E, but forming a different, lower angle with the edge of the opening 12E.

According to this second embodiment, the positioning member 30 should be inserted in the opening 12 by first inserting the first snap-fit element 35A through the opening 12 and snap-fitting it on the edge 12E, and then by inserting the second snap-fit element 35B and snap-fitting it on the edge 12E.

In the third embodiment shown on figures 6 to 9, that is particularly adapted to tilting handles, the positioning apparatus 30 comprises at least one finger prehensile area 38 projecting from the central body 31, in a direction that is opposite the direction in which the peripheral rim 33 extends. A tilting handle is here meant as a handle comprising a central component that may tilt within the opening owing to pressure exerted on one end of the central component of the handle, i.e such that it may stick out from the surface of the vehicle panel. When the central component of the handle is tilted, it is no longer flush with the surface of the vehicle panel.

Such a handle is described in application EP22158287 by the same applicant.

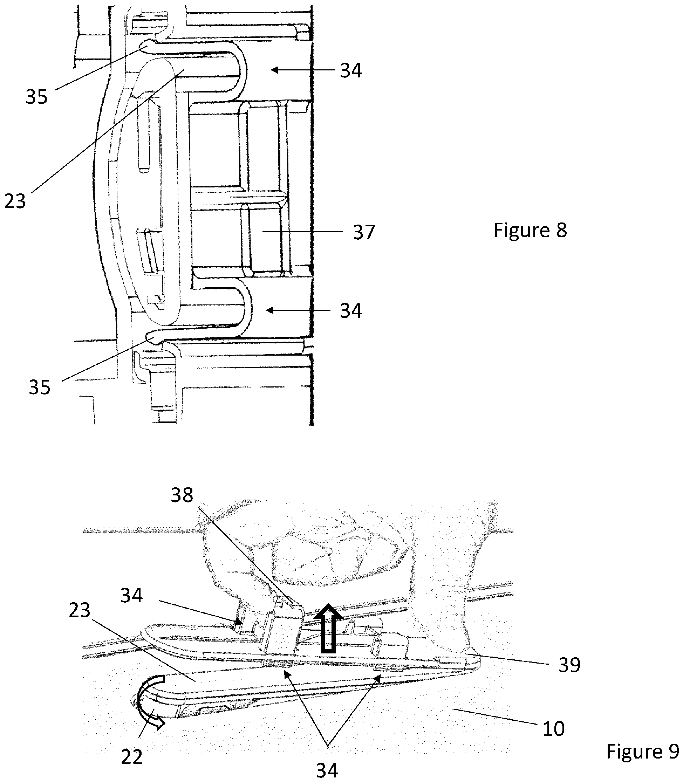

The prehensile area 38 defines an opening for the insertion of a finger, as can be seen on figures 6 and 9. The prehensile area 38 here defines an arch, but could alternatively be in the shape of a hook.

In this particular embodiment, the central body 31 comprises, at one of its ends, a pushing area 39, configured to be able to be pushed at least partially through the opening 12.

As can be seen on figure 9, pushing on the pushing area 39 in a direction towards the vehicle door panel 30 is meant to activate the handle 22 tilting. In other words, pushing on the pushing area 39 tilts the central component 23 of the handle such that the end of the central component 23 of the handle opposite the end that comprises the pushing area 39 sticks out from the surface of the vehicle panel 10. The direction of the movement of the tilting is shown by an arrow. When the central component 23 of the handle is tilted, it is no longer flush with the surface of the vehicle panel 10.

The invention also relates to a method for positioning an automotive equipment 20 on an automotive vehicle panel 10 in which an opening 12 is defined, the opening 12 being defined by edges 12E, said automotive vehicle panel 10 comprising an outer side 16 and an inner side 18, as illustrated on figure 1. This method is performed using a positioning apparatus 30 according to any one of the embodiments described previously.

The method comprises the following steps:
- inserting the positioning apparatus 30 in the opening 12 from the outer side 16 of the automotive vehicle panel 10 by aligning the peripheral rim 33 with the edges 12E that define the opening 12 within the automotive vehicle panel 10,
- inserting the automotive equipment 22 in the central body 31 from the inner side 18 of the automotive vehicle panel 10,
- attaching the automotive equipment 22 to the automotive vehicle panel 10, for example by screwing, although other means of attachment may also be considered,
- removing the positioning apparatus 30 from the opening 12 from the outer side 16 of the automotive vehicle panel 10.

According to a specific implementation of the above-described method, inserting the positioning apparatus 30 involves positioning the positioning apparatus 30 facing the opening 12 and displacing the at least one flexible tongue 36 in a first direction directed opposite the centre of the opening 12, and removing the positioning apparatus 30 involves displacing the at least one flexible tongue 36 in the second direction opposite the first direction.

According to another specific implementation of the above-described method, which in particular uses the positioning apparatus 30 according to the third embodiment shown on figures 6 to 9, and which is particularly adapted to a flush-type handle which may be tilted inside the opening 12, the step of removing the positioning apparatus 30 comprises the following sub-steps:
- pushing on the pushing area 39 in a direction towards the vehicle door panel 30, to active the handle tilting, and
- pulling on the finger prehensile area 38 in a direction opposite the vehicle door panel 10.

### List of references

10: vehicle panel
12: opening
12E : edge of the opening
16: outer side of the vehicle panel
18: inner side of the vehicle panel
20: automotive assembly
22: automotive equipment
23: central component
23E : edge of the central component
30: Positioning apparatus
31: Central body
32: Recess
33: peripheral rim
34: retaining member
35: snap-fit means
36: tongue
37: rib
38: prehensile area
39: pushing area
X-X : Longitudinal axis of the positioning apparatus

## Claims

1. Positioning apparatus (30) for positioning an automotive equipment (22) intended to be inserted in an opening (12) defined in an automotive vehicle panel (10), comprising :
- a central body (31) comprising a recess (32) intended to receive said automotive equipment (22),
- a peripheral rim (33) projecting from the central body (31), configured to cooperate with an edge (12E) of the opening (12) and to centre, within the opening (12), the automotive equipment that is inserted in the recess (32), and
- at least two flexible retaining members (34) arranged on the peripheral rim (33), each retaining member (34) being configured to cooperate with an edge (12E) of the opening (12) so that the positioning apparatus (30) can be removably attached to the automotive vehicle panel.

2. Positioning apparatus (30) according to claim 1, wherein the retaining members (34) include reversible snap-fit means (35) 15.

3. Positioning apparatus (30) according to claim 1 or 2, wherein the peripheral rim (33) and the retaining members (34) are intended to be inserted into a gap between the automotive equipment (22) and the edges (12E) of the opening (12) of the automotive vehicle panel.

4. Positioning apparatus (30) according to claim 3, wherein the width of each retaining member (34) is intended to be larger than the width of gap between the automotive equipment (22) and the edges (12E) of the opening (12) of the automotive vehicle panel.

5. Positioning apparatus (30) according to any one of the preceding claims, wherein at least one of the retaining members (34) is extended by a flexible tongue (36), configured such that displacement of the flexible tongue (36) in a first direction imparts the displacement of said retaining member (34) in a second direction, opposite the first direction.

6. Positioning apparatus (30) according to claim 5, wherein each retaining member (34) is extended by a flexible tongue (36).

7. Positioning apparatus (30) according to any one of the preceding claims, wherein it sensibly extends along a longitudinal axis (X-X) and the retaining members (34) are arranged on each side of the longitudinal axis, and preferably two pairs of retaining members (34) are arranged on each side of the longitudinal axis.

8. Positioning apparatus (30) according to claims 6 and 7 taken in combination, wherein flexible tongues (36) arranged on each side of the longitudinal axis are connected by a flexible rib (37).

9. Positioning apparatus (30) according to any one of the preceding claims, wherein it comprises at least one finger prehensile area (38) projecting from the central body (31), in a direction that is opposite the direction in which the peripheral rim (33) extends, the prehensile area (38) defining an opening (12) for the insertion of a finger.

10. Positioning apparatus (30) according to any one of the preceding claims, wherein the central body (31) comprises, at one of its ends, a pushing area (39), configured to be able to be pushed at least partially through the opening (12).

11. Automotive assembly (20) for equipping an automotive vehicle panel in which an opening (12) is defined, comprising an automotive equipment (22) comprising a central component (23) intended to be mounted within the opening (12) and a positioning apparatus (30), **characterized in that** said positioning apparatus (30) is according to any one of the preceding claims.

12. Automotive assembly (20) according to claim 11, wherein the automotive equipment (22) is a vehicle door handle, preferably a flush-type handle, and the vehicle panel is a door panel.

13. Method for positioning an automotive equipment (22) on an automotive vehicle panel in which an opening (12) is defined and defined by edges (12E), said automotive vehicle panel comprising an outer side and an inner side, wherein the method is performed using a positioning apparatus (30) according to any one of claims 1 to 10, comprising the following steps:
- inserting the positioning apparatus (30) in the opening (12) from the outer side of the automotive vehicle panel,
- inserting the automotive equipment (22) in the central body (31) from the inner side of the automotive vehicle panel,
- attaching the automotive equipment (22) to the automotive vehicle panel, for example by screwing,
- removing the positioning apparatus (30) from the opening (12) from the outer side of the automotive vehicle panel.

14. Method for positioning an automotive equipment (22) on an automotive vehicle panel according to claims 4 and 11 taken in combination, wherein inserting the positioning apparatus (30) involves positioning the positioning apparatus (30) facing the opening (12) and displacing the at least one flexible tongue (36) in a first direction directed opposite the centre of the opening (12), and removing the positioning apparatus (30) involves displacing the at least one flexible tongue (36) in the second direction opposite the first direction.

15. Method for positioning an automotive equipment (22) on an automotive vehicle panel according to claims 7, 8 and 11 taken in combination, wherein, the automotive equipment (22) being a flush-type handle which may be tilted inside the opening (12), the step of removing the positioning apparatus (30) comprising the following sub-steps:
- pushing on the pushing area (39) in a direction towards the vehicle door panel (10), to active the handle tilting, and
- pulling on the finger prehensile area (38) in a direction opposite the vehicle door panel.
